(19) **Europäisches Patentamt**
**European Patent Office**
**Office européen des brevets**

(11) **EP 4 403 848 A1**

(12) **EUROPEAN PATENT APPLICATION**
published in accordance with Art. 153(4) EPC

(43) Date of publication:
**24.07.2024 Bulletin 2024/30**

(21) Application number: **22867382.8**

(22) Date of filing: **07.09.2022**

(51) International Patent Classification (IPC):
*F25B 5/02* (2006.01)   *F25B 1/00* (2006.01)
*F24F 11/42* (2018.01)

(52) Cooperative Patent Classification (CPC):
**F24F 11/42; F24F 11/46; F24F 11/49; F24F 11/84;
F25B 1/00; F25B 5/02**

(86) International application number:
**PCT/JP2022/033584**

(87) International publication number:
**WO 2023/038060 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.09.2021 JP 2021148511**

(71) Applicant: **Panasonic Intellectual Property
Management Co., Ltd.
Kadoma-shi, Osaka 571-0057 (JP)**

(72) Inventors:
• **MAEKAWA, Naoki**
  **Kadoma-shi, Osaka 571-0057 (JP)**
• **MATSUI, Masaru**
  **Kadoma-shi, Osaka 571-0057 (JP)**
• **KAWANO, Bunki**
  **Kadoma-shi, Osaka 571-0057 (JP)**
• **MASUDA, Tetsuya**
  **Kadoma-shi, Osaka 571-0057 (JP)**

(74) Representative: **Eisenführ Speiser
Patentanwälte Rechtsanwälte PartGmbB
Postfach 31 02 60
80102 München (DE)**

(54) **AIR CONDITIONER**

(57)    The present disclosure provides a gas heat pump air conditioner that can prevent refrigerating machine oil from remaining in a heat exchanger when the heat exchanger is used as an evaporator. An air conditioner according to the present disclosure includes: a compressor 101; an outdoor heat exchanger 106; a flow rate control valve 112; and an indoor heat exchanger 201, the compressor, the outdoor heat exchanger, the flow rate control valve, and the indoor heat exchanger being sequentially connected with a refrigerant pipe in an annular manner. The air conditioner causes a refrigerant to flow in the refrigerant pipe, and exchanges heat with air in a predetermined space in the indoor heat exchanger 201, and controls temperature in a predetermined space. The outdoor heat exchanger 106 includes a first region 106a and a second region 106b in which the refrigerant flows in parallel to each other, and the first region 106a has a refrigerant inflow section, on a flow rate control valve 112 side, provided with a first on-off valve 113.

FIG.1

EP 4 403 848 A1

## Description

[Technical Field]

The present disclosure relates to a gas heat pump air conditioner in which a gas engine drives a compressor that compresses a refrigerant.

[Background Art]

Patent Literature 1 discloses a parallel flow heat exchanger that can provide appropriate refrigerant distribution and can provide a sufficient amount of heat to be exchanged, both as a condenser and as an evaporator. This heat exchanger is configured such that the internal cross-sectional area of the upper header pipe is 1.4 times or more the internal cross-sectional area of the lower header pipe.

[Citation List]

[Patent Literature]

[Patent Literature 1]
Japanese Patent Laid-Open No. 2004-286246

[Summary of Invention]

[Technical Problem]

The present disclosure provides a gas heat pump air conditioner (hereinafter referred to as a GHP) that can prevent refrigerating machine oil from remaining in a heat exchanger when the heat exchanger is used as an evaporator.

[Solution to Problem]

This description includes all contents of Japanese Patent Application No. 2021-148511 filed on September 13, 2021.

An air conditioner according to the present disclosure includes: a compressor; an outdoor heat exchanger; a flow rate control valve; and an indoor heat exchanger, the compressor, the outdoor heat exchanger, the flow rate control valve, and the indoor heat exchanger being sequentially connected with a refrigerant pipe in an annular manner, the air conditioner: causing a refrigerant to flow in the refrigerant pipe, exchanging heat with air in a predetermined space in the indoor heat exchanger; and controlling temperature in the predetermined space, wherein the outdoor heat exchanger includes a first region and a second region in which a refrigerant flows in parallel to each other, and the first region has a refrigerant inflow section, on a side of the flow rate control valve, provided with an on-off valve.

[Advantageous Effect of Invention]

In the air conditioner according to the present disclosure, when the outdoor heat exchanger is used as an evaporator, closing the on-off valve switches the refrigerant flow path only to the second region, resulting in a smaller cross-sectional area of the refrigerant flow path and a larger refrigerant flow rate. In other words, this increases the speed difference between the refrigerant and the refrigerating machine oil, thereby increasing the shear force applied to the refrigerating machine oil in the vertically upward direction. Therefore, since the refrigerating machine oil can rise up the heat transfer tubes, it is possible to prevent the refrigerating machine oil from remaining in the heat exchanger.

[Brief Description of the Drawings]

[Fig. 1] Fig. 1 is a diagram showing a refrigerant flow path and a cooling water flow path of an air conditioner according to Embodiment 1 of the present disclosure.
[Fig. 2] Fig. 2 is a diagram showing a configuration of an outdoor heat exchanger according to Embodiment 1 of the present disclosure.
[Fig. 3A] Fig. 3A is a side view of an outdoor unit according to Embodiment 1 of the present disclosure.
[Fig. 3B] Fig. 3B is a front view of the outdoor unit according to Embodiment 1 of the present disclosure.
[Fig. 3C] Fig. 3C is a top view of the outdoor unit according to Embodiment 1 of the present disclosure.
[Fig. 4] Fig. 4 is a diagram showing a refrigerant flow path and a cooling water flow path of an air conditioner according to Embodiment 2 of the present disclosure.
[Fig. 5] Fig. 5 is a diagram showing a refrigerant flow path and a cooling water flow path of an air conditioner according to Example 1 of another embodiment of the present disclosure.
[Fig. 6] Fig. 6 is a diagram showing a refrigerant flow path and a cooling water flow path of an air conditioner according to Example 2 of another embodiment of the present disclosure.
[Fig. 7A] Fig. 7A is a side view of an outdoor unit according to Example 3 of another embodiment of the present disclosure.
[Fig. 7B] Fig. 7B is a front view of the outdoor unit according to Example 3 of another embodiment of the present disclosure.
[Fig. 7C] Fig. 7C is a top view of the outdoor unit according to Example 3 of another embodiment of the present disclosure.

[Description of Embodiments]

(Knowledge on which the present disclosure is based)

When the inventors came up with the present disclosure, in a parallel flow heat exchanger that includes a pair of header pipes facing each other horizontally and heat transfer tubes connecting them at both ends, a heat exchanger had been proposed in which the internal cross-sectional area of an upper header pipe is 1.4 times or more that of the lower header pipe. According to this, when the heat exchanger is used as a condenser, the pressure loss in the upper header pipe, which serves as the refrigerant vapor inlet, is approximately the same as the pressure loss in the lower header pipe, which serves as the liquid refrigerant outlet. On the other hand, when the heat exchanger is used as an evaporator, the pressure loss in the upper header pipe, which serves as the refrigerant vapor outlet, is approximately the same as the pressure loss in the lower header pipe, which serves as the liquid refrigerant inlet. Therefore, the static pressure difference between the upper and lower headers is almost constant in all the heat transfer tubes. This makes the refrigerant distribution uniform, making it possible to obtain a sufficient amount of heat to be exchanged.

In the above configuration, when the heat exchanger is used as an evaporator, the refrigerating machine oil vertically rises up in the heat transfer tube while being dissolved in the refrigerant. Here, the refrigerating machine oil separated from the evaporated refrigerant through heat exchange with the air rises up the heat transfer tubes due to the shear force caused by the speed difference from the gas phase refrigerant. Therefore, when the speed of the gas phase refrigerant is slow, for example, in low-load operation, the refrigerant cannot rise up the heat transfer tubes and remains in the heat exchanger. Under such circumstances, the inventors came up with an idea of increasing the refrigerant flow rate to increase the shear force caused by the speed difference between the refrigerant and the refrigerating machine oil, thereby allowing the refrigeration machine oil to rise up the heat transfer tube. The inventors then discovered that, in order to realize this idea, there was a problem in that the cross-sectional area of the refrigerant flow path in the heat exchanger remained constant even if the air conditioning load fluctuated. To solve the problem, the inventors have come to constitute the subject matter of the present disclosure.

The present disclosure provides a GHP that has an outdoor heat exchanger provided with a first region and a second region in which the refrigerant flows in parallel to each other, and switches the on-off valve to allow refrigerant to flow only to the second region when the outdoor heat exchanger is used as an evaporator, thereby increasing the refrigerant flow rate to allow the refrigerating machine oil to rise up the heat transfer tubes.

Hereinafter, embodiments will be described in detail with reference to the drawings. However, unnecessarily detailed description may be omitted. For example, detailed explanation of well-known matters or redundant explanation of substantially the same configurations may be omitted. This is to avoid the following explanation from being unnecessarily redundant and to facilitate understanding by those skilled in the art.

Note that the accompanying drawings and the following description are provided to enable those skilled in the art to fully understand the present disclosure, and are not intended to limit the subject matter recited in the claims.

(Embodiment 1)

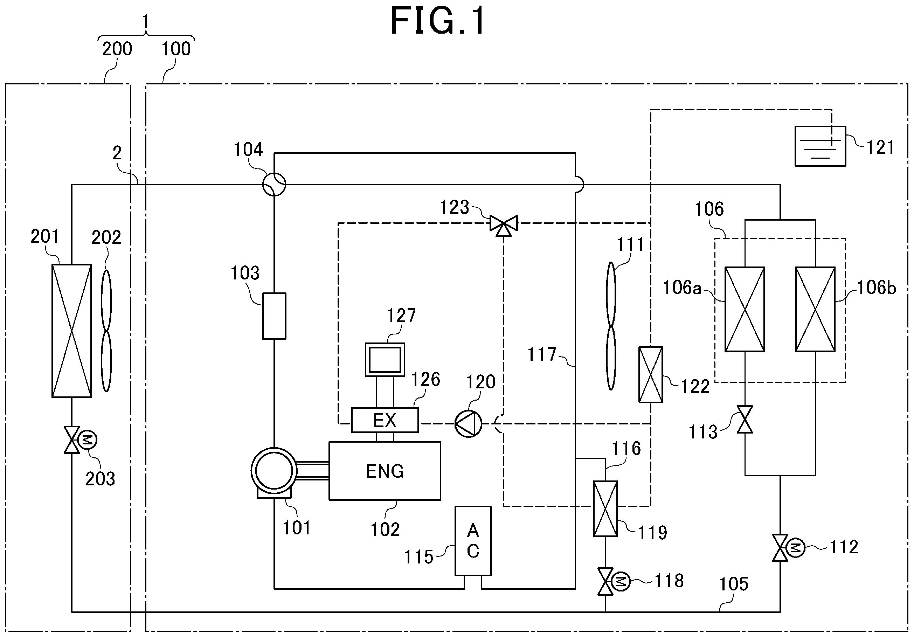

Embodiment 1 will be described below using Figs. 1 to 3C.

[1-1. Configuration]

[1-1-1. Refrigerant flow path]

In Fig. 1, an air conditioner 1 includes an outdoor unit 100 and an indoor unit 200, and the indoor unit 200 is connected to a unit pipe 2 extending from the outdoor unit 100. The indoor unit 200 and the outdoor unit 100 are connected to each other by a refrigerant pipe to form a refrigerant circuit.

In the outdoor unit 100, a compressor 101 is connected to a gas engine 102 by power transmission means such as a belt. An oil separator 103 is installed in the discharge pipe of the compressor 101 and separates refrigerating machine oil contained in the refrigerant gas discharged from the compressor 101. The oil separated by the oil separator 103 is returned to a suction pipe of the compressor 101 through an oil return pipe (not shown). A four-way valve 104 is for switching the refrigeration cycle between cooling and heating, and Fig. 1 shows the flow in heating. A refrigerant liquid pipe 105 connects an outdoor heat exchanger 106 and an indoor heat exchanger 201.

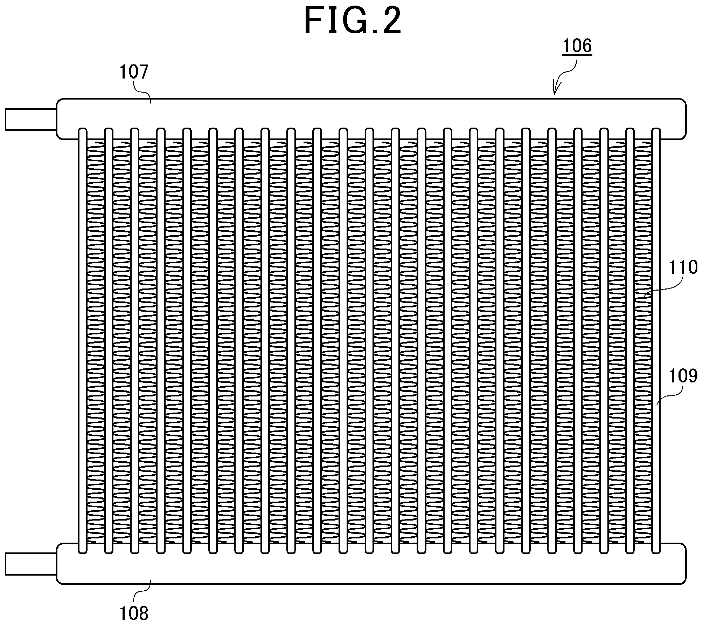

As shown in Fig. 2, the outdoor heat exchanger 106 includes heat transfer tubes 109 each having both ends connected to a pair of upper header pipe 107 and a lower header pipe 108 that face each other horizontally. The upper header pipe 107 and the lower header pipe 108 each include a refrigerant inflow section. The heat transfer tubes 109 are arranged in parallel in the vertical direction, and heat transfer fins 110 are provided between them.

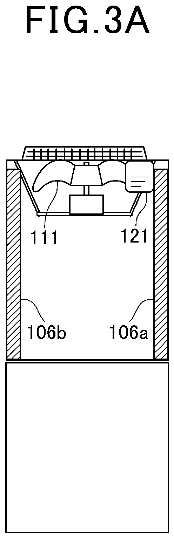

In addition, as shown in Fig. 3A, the outdoor heat exchanger 106 includes a first region 106a and a second region 106b through which the refrigerant flows in parallel to each other. The outdoor heat exchanger 106 radiates heat of the refrigerant to the outside in cooling operation and absorbs heat from outside air in heating operation, with an outdoor fan 111.

As shown in Fig. 1, an outdoor flow rate control valve (flow rate control valve) 112 is provided in the refrigerant liquid pipe 105 and adjusts the pressure and flow rate of the refrigerant. A first on-off valve (on-off valve) 113 is provided at the refrigerant inflow section of the first region 106a on the outdoor flow rate control valve 112 side, and opens and closes the refrigerant flow path. The accumulator 115 is connected to the suction pipe of the compressor 101 and supplies gas refrigerant to the compressor 101. The exhaust heat recovery bypass pipe 116 has one end connected to the upstream side of the accumulator 115 of the low-pressure gas pipe 117, and the other end connected to the refrigerant liquid pipe 105, and is provided with an exhaust heat recovery flow rate control valve 118 and an exhaust heat recovery heat exchanger 119 in order from the upstream side in the refrigerant flow direction, to be configured so that the refrigerant can also absorb heat from cooling water, which will be described below, in heating operation.

In the indoor unit 200, the indoor heat exchanger 201 absorbs indoor heat in cooling operation and radiates heat from the refrigerant inside the room in heating operation, with an indoor fan 202. The indoor flow rate control valve 203 adjusts the pressure and flow rate of the refrigerant. In Fig. 1, only one indoor unit 200 is installed, but a plurality of indoor units 200 may be installed parallel to each other, to the outdoor unit 100.

[1-1-2. Cooling water flow path]

The cooling water flow path shown by a broken line in Fig. 1 includes a cooling water pump 120, a reservoir tank 121, a radiator 122, a three-way valve 123, and an exhaust heat recovery heat exchanger 119. The cooling water flow path is a flow path for cooling the gas engine 102 with cooling water circulating through a circuit composed of these.

The cooling water pump 120 circulates cooling water for the gas engine 102 through the circuit. The reservoir tank 121 temporarily stores surplus cooling water in order to supplement the cooling water when the cooling water is insufficient. The radiator 122 radiates heat from the cooling water with the outdoor fan 111. The arrangement of the radiator 122 will be described below. The three-way valve 123 can switch the flow path of the cooling water to the radiator 122 side, the exhaust heat recovery heat exchanger 119 side, or both the radiator 122 and the exhaust heat recovery heat exchanger 119. The three-way valve 123 allows the cooling water to flow to the radiator 122 side in cooling operation, and allows a part of the cooling water to flow to the radiator 122 and allows the remaining cooling water to flow to the exhaust heat recovery heat exchanger 119, in heating operation. In this way, the three-way valve 123 controls the temperature of the cooling water to be returned to the gas engine 102 to be maintained substantially constant. As described above, the exhaust heat recovery heat exchanger 119 allows the refrigerant and the cooling water to flow, so that the refrigerant absorbs heat from the cooling water.

[1-1-3. Configuration of outdoor unit]

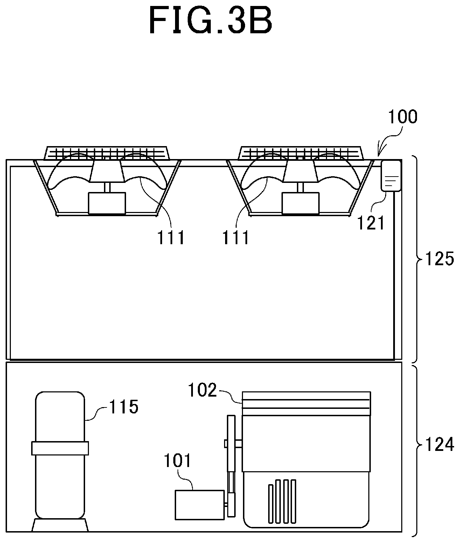

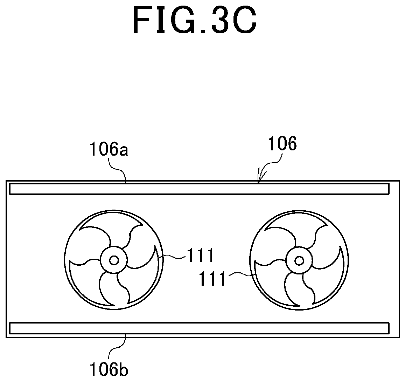

In Figs. 3A, 3B, and 3C, the outdoor unit 100 has a lower side provided with a machine room 124 and has an upper side provided with a heat exchanger room 125. The machine room 124 includes the compressor 101, the gas engine 102, the accumulator 115, and others (not shown) including the oil separator, the four-way valve, the flow rate control valve, and the exhaust heat recovery heat exchanger. The heat exchanger room 125 includes the outdoor heat exchanger 106, the outdoor fan 111, and the reservoir tank 121. The first region 106a is arranged on the front side of the casing of the outdoor unit 100. The second region 106b is arranged on the back side of the casing of the outdoor unit 100. The functions of each element are as described above.

Furthermore, in the present embodiment, the outdoor unit 100 has a control section (not shown). The control section includes a processor such as a CPU or MPU that executes a program, and a memory such as a ROM or RAM, for example. Various processing are executed through the cooperation of hardware and software in such a way as that a processor reads a control program stored in a memory and executes the processing. As an example, in the present embodiment, the control section controls switching between opening and closing of the first on-off valve 113.

[1-2. Operation]

The operation of the air conditioner 1 configured as above will be described below.

[1-2-1. Refrigerant side operation]

[1-2-1-1. Operation in cooling operation]

In cooling operation of the air conditioner 1, the first on-off valve 113 is opened.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, flows into the first region 106a and second region 106b of the outdoor heat exchanger 106 connected in parallel, and exchanges heat with outside air to radiate heat and then condense. The liquid refrigerant that has passed through the first region 106a passes through the first on-off valve 113, comes together with the refrigerant that has passed through the second region 106b, passes through the outdoor flow rate control valve 112, and is then supplied to the indoor unit 200.

The high-pressure liquid refrigerant that has flowed into the indoor unit 200 is depressurized by the indoor flow rate control valve 203, comes in a gas-liquid two-phase state, and flows into the indoor heat exchanger 201. In the indoor heat exchanger 201, the refrigerant in a gas-liquid two-phase state exchanges heat with the air in the space to be air-conditioned to absorb heat and then evaporate, becomes a low-pressure gas refrigerant, and flows out of the indoor unit 200.

The low-pressure gas refrigerant that has flowed out of the indoor unit 200 flows into the outdoor unit 100 again. The gas refrigerant that has flowed into the outdoor unit 100 passes through the four-way valve 104 and the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[1-2-1-2. Operation in high-load heating operation]

In high-load heating operation of the air conditioner 1, the first on-off valve 113 and the exhaust heat recovery flow rate control valve 118 are opened.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, and is then supplied to the indoor unit 200.

The high-pressure gas refrigerant that has flowed into the indoor unit 200 flows into the indoor heat exchanger 201, and exchanges heat with the air in the space to be air-conditioned to radiate heat and then condense. Then, the refrigerant becomes a high-pressure liquid refrigerant, passes through the indoor flow rate control valve 203, and flows out of the indoor unit 200.

The high-pressure liquid refrigerant that has flowed out of the indoor unit 200 flows into the outdoor unit 100 again. The liquid refrigerant that has flowed into the outdoor unit 100 has: a part that flows into the exhaust heat recovery bypass pipe 116; and the remaining part that is depressurized in the outdoor flow rate control valve 112, comes in a gas-liquid two-phase state, and flows into the first region 106a and the second region 106b of the outdoor heat exchanger 106.

The liquid refrigerant that has flowed into the exhaust heat recovery bypass pipe 116 is depressurized in the exhaust heat recovery flow rate control valve 118, comes in a gas-liquid two-phase state, and flows into the exhaust heat recovery heat exchanger 119. The refrigerant in a gas-liquid two-phase state, which has flowed into the exhaust heat recovery heat exchanger 119, absorbs heat from engine cooling water, which will be described below, and then evaporates to be a low-temperature, low-pressure gas refrigerant.

Furthermore, the refrigerant in a gas-liquid two-phase state, which has flowed into the first region 106a and second region 106b of the outdoor heat exchanger 106, exchanges heat with the outside air to absorb heat and then evaporate, and becomes a low-pressure gas refrigerant. The low-pressure gas refrigerant comes together, passes through the four-way valve 104, and then passes through the low-pressure gas pipe 117 in which the refrigerant comes together with the low-temperature, low-pressure gas refrigerant evaporated in the exhaust heat recovery heat exchanger 119, passes through the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[1-2-1-3. Operation in low-load heating operation]

In low-load heating operation of the air conditioner 1, the first on-off valve 113 is closed, and the exhaust heat recovery flow rate control valve 118 is opened.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, and is then supplied to the indoor unit 200.

The high-pressure gas refrigerant that has flowed into the indoor unit 200 flows into the indoor heat exchanger 201, and exchanges heat with the air in the space to be air-conditioned to radiate heat and then condense. Then, the refrigerant becomes a high-pressure liquid refrigerant, passes through the indoor flow rate control valve 203, and flows out of the indoor unit 200.

The high-pressure liquid refrigerant that has flowed out of the indoor unit 200 flows into the outdoor unit 100 again. The liquid refrigerant that has flowed into the outdoor unit 100 has: a part that flows into the exhaust heat recovery bypass pipe 116; and the remaining part that is depressurized in the outdoor flow rate control valve 112, comes in a gas-liquid two-phase state, and flows into the second region 106b of the outdoor heat exchanger 106.

The liquid refrigerant that has flowed into the exhaust heat recovery bypass pipe 116 is depressurized in the exhaust heat recovery flow rate control valve 118, comes in a gas-liquid two-phase state, and flows into the exhaust heat recovery heat exchanger 119. The refrigerant in a gas-liquid two-phase state, which has flowed into the exhaust heat recovery heat exchanger 119, absorbs heat from engine cooling water, which will be described below, and then evaporates to be a low-temperature, low-pressure gas refrigerant.

Furthermore, the refrigerant in a gas-liquid two-phase state, which has flowed into the second region 106b of the outdoor heat exchanger 106, exchanges heat with the outside air to absorb heat and then evaporate, and becomes a low-pressure gas refrigerant. The low-pressure gas refrigerant passes through the four-way valve 104, and then passes through the low-pressure gas pipe 117 in which the refrigerant comes together with the low-temperature, low-pressure gas refrigerant evaporated in the exhaust heat recovery heat exchanger 119, passes through the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[1-2-2. Cooling water side operation]

The cooling water pushed out by the cooling water pump 120 flows into the exhaust gas heat exchanger 126 and cools the exhaust gas of the gas engine 102. The exhaust gas cooled in the exhaust gas heat exchanger 126 is discharged from the exhaust gas muffler 127 to the outside air. The cooling water that has passed through the exhaust gas heat exchanger 126 flows into the gas engine 102 and cools the gas engine 102.

The cooling water that has cooled the gas engine 102 flows into the three-way valve 123. The three-way valve 123 is controlled into a direction to allow the cooling water from the gas engine 102 to flow to the radiator 122. Note that, in heating operation, the three-way valve 123 serves to allow cooling water to flow to both the radiator 122 and the exhaust heat recovery heat exchanger 119. The cooling water that has flowed into the radiator 122 is cooled by the introduced outside air in the outdoor unit 100, returns to the cooling water pump 120 again, and repeats the above process. The cooling water that has flowed into the exhaust heat recovery heat exchanger 119 is cooled by the refrigerant in a gas-liquid two-phase state, which refrigerant has been depressurized in the indoor flow rate control valve 203, returns to the cooling water pump 120 again, and repeats the above process.

Note that an outdoor unit control section (not shown) monitors the cooling water outlet temperature of the gas engine 102, and controls the rotation speed of the cooling water pump 120 to maintain a substantially constant temperature.

[1-3. Effects, etc.]

As described above, in the present embodiment, the air conditioner 1 includes the compressor 101, the indoor heat exchanger 201, the indoor flow rate control valve 203, the outdoor flow rate control valve 112, and the outdoor heat exchanger 106 that are connected with piping in this order in an annular manner. The air conditioner 1 causes a refrigerant to flow in piping, exchanges heat with air in a predetermined space in an indoor heat exchanger 201, and controls the temperature of the predetermined space. The outdoor heat exchanger 106 includes a first region 106a and a second region 106b in which a refrigerant flows in parallel to each other, and the first region 106a has the refrigerant inflow section, on the indoor flow rate control valve 203 side, provided with a first on-off valve 113.

As a result, closing the first on-off valve 113 in low-load heating operation switches the refrigerant flow path to only the second region 106b, thereby reducing the cross-sectional area of the refrigerant flow path to increase the refrigerant flow rate. In other words, this increases the speed difference between the refrigerant and the refrigerating machine oil, thereby increasing the shear force applied to the refrigerating machine oil in the vertically upward direction. This allows the refrigerating machine oil to rise up the heat transfer tubes 109, preventing the refrigerating machine oil from remaining in the heat exchanger.

In the present embodiment, in low-load heating operation, the refrigerant passes through only the second region 106b, resulting in reduced heat transfer area and reduced amount of air passing through the refrigerant flow section. Generally, the amount of heat to be exchanged Q in a heat exchanger is given by Expression 1, where K is the heat transfer rate of the heat exchanger, A is the heat transfer area, and $\Delta T$ is the temperature difference between the fluids that exchange heat.

$$Q = K \bullet A \bullet \Delta T \quad \ldots \quad (\text{Expression 1})$$

In the present embodiment, in low-load heating operation, the heat transfer rate K reduces due to the reduction in the heat transfer area A and the amount of passing air, resulting in a reduced amount of heat to be exchanged Q. However, since the exhaust heat recovery heat exchanger 119 is provided as described above, in heating operation, a part of the refrigerant exchanges heat with the cooling water in the exhaust heat recovery heat exchanger 119 to absorb heat, making it possible to cover the shortage of the heat exchange amount. In other words, even in low-load heating operation, the required amount of heat can be exchanged.

(Embodiment 2)

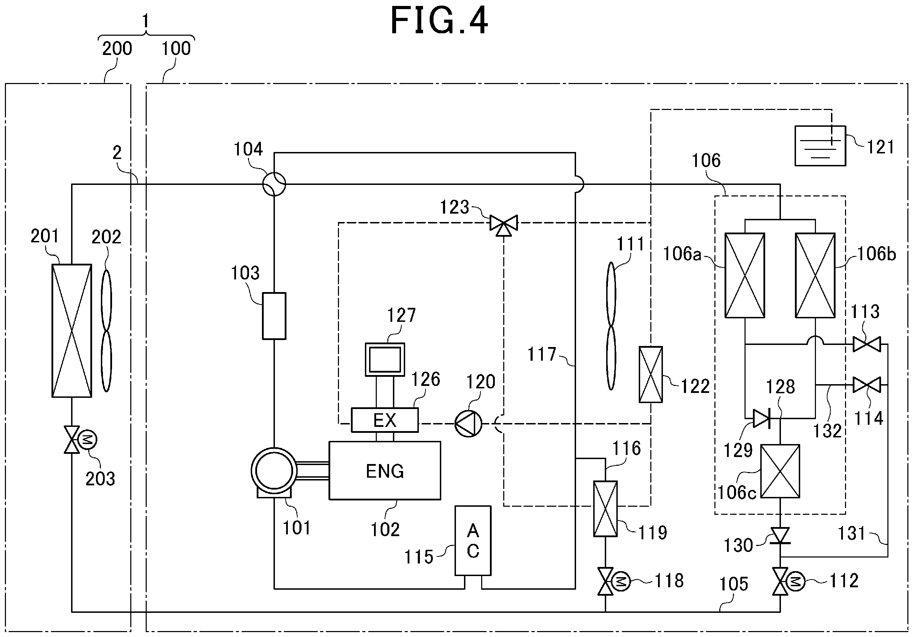

Embodiment 2 will be described below using Fig. 4.

[2-1. Configuration]

[2-1-1. Refrigerant flow path]

As shown in Fig. 4, an air conditioner 1 according to Embodiment 2 has an outdoor heat exchanger 106 that includes a third region 106c, a confluence section 128, a first check valve 129, a second check valve 130, a first bypass pipe 131, a second bypass pipe 132, and a second on-off valve 114. In terms of this point, the air conditioner 1 according to Embodiment 2 differs from the air conditioner 1 according to Embodiment 1.

In Embodiment 2, the outdoor heat exchanger 106 includes heat transfer tubes 109 each having both ends connected to a pair of an upper header pipe 107 and a lower header pipe 108 that face each other horizontally. The outdoor heat exchanger 106 includes a first region 106a, a second region 106b, and a third region 106c in which a refrigerant flows in parallel to each other. The outdoor heat exchanger 106 radiates heat of the refrigerant to the outside in cooling operation and absorbs heat from outside air in heating operation, with an outdoor fan 111. Here, the front surface area of the outdoor heat exchanger 106 in the present embodiment is equivalent to the front surface area of the outdoor heat exchanger 106 according to Embodiment 1.

The confluence section 128 connects a refrigerant inflow section of the first region 106a on the outdoor flow rate control valve 112 side, a refrigerant inflow section of the second region 106b on the outdoor flow rate control valve 112 side, and a refrigerant inflow section of the third region 106c on the four-way valve 104 side. The first check valve 129 is provided at the refrigerant outflow section of the first region 106a on the outdoor flow rate control valve 112 side. The second check valve 130 is provided at the refrigerant outflow section of the third region 106c on the outdoor flow rate control valve 112 side.

The first bypass pipe 131 has one end connected between the second check valve 130 and the outdoor flow rate control valve 112 in the refrigerant inflow section of the third region 106c on the outdoor flow rate control valve 112 side, and has the other end connected between the first check valve 129 and the first region 106a, in the refrigerant inflow section of the first region 106a on the outdoor flow rate control valve 112 side.

The second bypass pipe 132 has one end connected to the first bypass pipe 131 and the other end connected to the refrigerant inflow section of the second region 106b on the outdoor flow rate control valve 112 side. The first on-off valve 113 is provided between the connection of the first bypass pipe 131 with the second bypass pipe 132 and the connection of the first bypass pipe 131 with the refrigerant inflow section of the first region 106a on the outdoor flow rate control valve 112 side, and adjusts the pressure and flow rate of the refrigerant. The second on-off valve 114 is provided in the second bypass pipe 132 and adjusts the pressure and flow rate of the refrigerant.

Note that, in the present embodiment, the outdoor unit 100 has a control section (not shown). The control section includes a processor such as a CPU or MPU that executes a program, and a memory such as a ROM or RAM, for example. Various processing are executed through the cooperation of hardware and software in such a way as that a processor reads a control program stored in a memory and executes the processing. As an example, in the present embodiment, the control section controls switching between opening and closing of the first on-off valve 113 and the second on-off valve 114.

[2-2. Operation]

The operation of the air conditioner 1 configured as above will be described below.

[2-2-1. Refrigerant side operation]

[2-2-1-1. Operation in cooling operation]

In cooling operation of the air conditioner 1 according to Embodiment 2, the first on-off valve 113 and the second on-off valve 114 are closed.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, flows into the first region 106a and second region 106b of the outdoor heat exchanger 106 connected in parallel, and exchanges heat with outside air to radiate heat and then condense. The condensed high-pressure liquid refrigerant passes through the confluence section 128, flows into the third region 106c, and exchanges heat with the outside air to further radiate heat. Then, the refrigerant passes through the second check valve 130 and the outdoor flow rate control valve 112, and is supplied to the indoor unit 200.

The high-pressure liquid refrigerant that has flowed into the indoor unit 200 is depressurized by the indoor flow rate control valve 203, comes in a gas-liquid two-phase state, and flows into the indoor heat exchanger 201. In the indoor heat exchanger 201, the refrigerant in a gas-liquid two-phase state exchanges heat with the air in the space to be air-conditioned to absorb heat and then evaporate, becomes a low-pressure gas refrigerant, and flows out of the indoor unit 200.

The low-pressure gas refrigerant that has flowed out of the indoor unit 200 flows into the outdoor unit 100 again. The gas refrigerant that has flowed into the outdoor unit 100 passes through the four-way valve 104 and the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[2-2-1-2. Operation in high-load heating operation]

In high-load heating operation of the air conditioner 1 according to the Embodiment 2, the first on-off valve 113, the second on-off valve 114, and the exhaust heat recovery flow rate control valve 118 are each opened.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, and is then supplied to the indoor unit 200.

The high-pressure gas refrigerant that has flowed into the indoor unit 200 flows into the indoor heat exchanger 201, and exchanges heat with the air in the space to be air-conditioned to radiate heat and then condense. Then, the refrigerant becomes a high-pressure liquid refrigerant, passes through the indoor flow rate control valve 203, and flows out of the indoor unit 200.

The high-pressure liquid refrigerant that has flowed out of the indoor unit 200 flows into the outdoor unit 100 again. The liquid refrigerant that has flowed into the outdoor unit 100 has: a part that flows into the exhaust heat recovery bypass pipe 116; and the remaining part that is depressurized in the outdoor flow rate control valve 112, comes in a gas-liquid two-phase state, and flows into the first bypass pipe 131. The refrigerant in a gas-liquid two-phase state that has flowed into the first bypass pipe 131 has: a part that flows into the first region 106a through the first on-off valve 113; and the remaining part that flows into the second region 106b through the second on-off valve 114.

The liquid refrigerant that has flowed into the exhaust heat recovery bypass pipe 116 is depressurized in the exhaust heat recovery flow rate control valve 118, comes in a gas-liquid two-phase state, and flows into the exhaust heat recovery heat exchanger 119. The refrigerant in a gas-liquid two-phase state, which has flowed into the exhaust heat recovery heat exchanger 119, absorbs heat from engine cooling water, then evaporates, and becomes a low-temperature, low-pressure gas refrigerant. Furthermore, the refrigerant in a gas-liquid two-phase state, which has flowed into the first region 106a and the second region 106b of the outdoor heat exchanger 106, exchanges heat with the outside air to absorb heat and then evaporate, and becomes a low-pressure gas refrigerant. The low-pressure gas refrigerant comes together, passes through the four-way valve 104, and then passes through the low-pressure gas pipe 117 in which the refrigerant comes together with the low-temperature, low-pressure gas refrigerant evaporated in the exhaust heat recovery heat exchanger 119, passes through the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[2-2-1-3. Operation in low-load heating operation]

In low-load heating operation of the air conditioner 1 according to Embodiment 2, the first on-off valve 113 is closed, and the second on-off valve 114 and the exhaust heat recovery flow rate control valve 118 are opened.

The compressor 101 that compresses refrigerant is driven by the gas engine 102. The high-temperature, high-pressure refrigerant compressed by the compressor 101 flows into the oil separator 103. The high-purity gas refrigerant from which oil has been separated in the oil separator 103 passes through the four-way valve 104, and is then supplied to the indoor unit 200.

The high-pressure gas refrigerant that has flowed into the indoor unit 200 flows into the indoor heat exchanger 201, and exchanges heat with the air in the space to be air-conditioned to radiate heat and then condense. Then, the refrigerant becomes a high-pressure liquid refrigerant, passes through the indoor flow rate control valve 203, and flows out of the indoor unit 200.

The high-pressure liquid refrigerant that has flowed out of the indoor unit 200 flows into the outdoor unit 100 again. The liquid refrigerant that has flowed into the outdoor unit 100 has: a part that flows into the exhaust heat recovery bypass pipe 116; and the remaining part that is depressurized in the outdoor flow rate control valve 112, comes in a gas-liquid two-phase state, passes through the first bypass pipe 131 and the second on-off valve 114, and flows into the second region 106b of the outdoor heat exchanger 106.

The liquid refrigerant that has flowed into the exhaust heat recovery bypass pipe 116 is depressurized in the exhaust heat recovery flow rate control valve 118, comes in a gas-liquid two-phase state, and flows into the exhaust heat recovery heat exchanger 119. The refrigerant in a gas-liquid two-phase state, which has flowed into the exhaust heat recovery heat exchanger 119, absorbs heat from engine cooling water, then evaporates, and becomes a low-temperature, low-pressure gas refrigerant. Furthermore, the refrigerant in a gas-liquid two-phase state, which has flowed into the second region 106b of the outdoor heat exchanger 106, exchanges heat with the outside air to absorb heat and then evaporate, and becomes a low-pressure gas refrigerant. The low-pressure gas refrigerant passes through the four-way valve 104, and then passes through the low-pressure gas pipe 117 in which the refrigerant comes together with the low-temperature, low-pressure gas refrigerant evaporated in the exhaust heat recovery heat exchanger 119, passes through the accumulator 115, returns to the compressor 101, and repeats the above process.

Furthermore, the oil separated by the oil separator 103 flows into the suction pipe of the compressor through an oil return pipe (not shown), returns to the compressor 101, and repeats the above process.

[2-3. Effects, etc.]

As described above, in the present embodiment, the air conditioner 1 includes the third region 106c of the outdoor heat exchanger 106, the confluence section 128, the first check valve 129, the second check valve 130, the first bypass pipe 131, the second bypass pipe 132, and second on-off valve 114. In terms of this point, the air conditioner 1 according to Embodiment 2 differs from the air conditioner 1 according to Embodiment 1.

As a result, closing the first on-off valve 113 in low-load heating operation allows the refrigerant to flow only to the second region 106b. The outdoor heat exchanger 106 in the present embodiment has a front surface area equivalent to that of the outdoor heat exchanger 106 in Embodiment 1. Therefore, the second region 106b in the present embodiment has a smaller front surface area than the second region 106b in Embodiment 1. In other words, the second region 106b in the present embodiment has a smaller refrigerant flow path cross-sectional area than the second region 106b in Embodiment 1, so that the refrigerant flow rate is further increased.

Generally, in a heat exchanger, when heat transfer tubes are mounted in high density (reduced stage pitch), the cross-sectional area of the refrigerant flow path increases, resulting in a reduced refrigerant flow rate. Therefore, in low-load heating operation, refrigerating machine oil is more difficult to rise up the heat transfer tubes.

In the present embodiment, the outdoor heat exchanger 106 has a front surface area equivalent to that in Embodiment 1, and is divided into three regions. This reduces the refrigerant flow path cross-sectional area of the second region, allowing the refrigerant flow rate to increase. Therefore, even when heat transfer tubes are mounted in high density, the refrigerating machine oil can rise up the heat transfer tubes. In other words, even when heat transfer tubes are mounted in high density, it is possible to prevent the refrigerating machine oil from remaining in the heat exchanger.

(Other embodiments)

As described above, Embodiments 1 and 2 have been described as examples of the technique disclosed in the present application. However, the technique in the present disclosure is not limited to this, and can also be applied to embodiments in which changes, substitutions, additions, omissions, etc. are made. Furthermore, it is also possible to create a new embodiment by combining the components described in Embodiments 1 and 2.

Therefore, other embodiments will be illustrated below.

In Embodiments 1 and 2, GHP has been explained as an example of an air conditioner. The air conditioner may have any configuration as long as the air conditioner can exchange heat between the cooling water heated by engine exhaust heat and the refrigerant in the exhaust heat recovery heat exchanger in heating operation. Therefore, the drive source for the compressor installed in the air conditioner is not limited to only the gas engine.

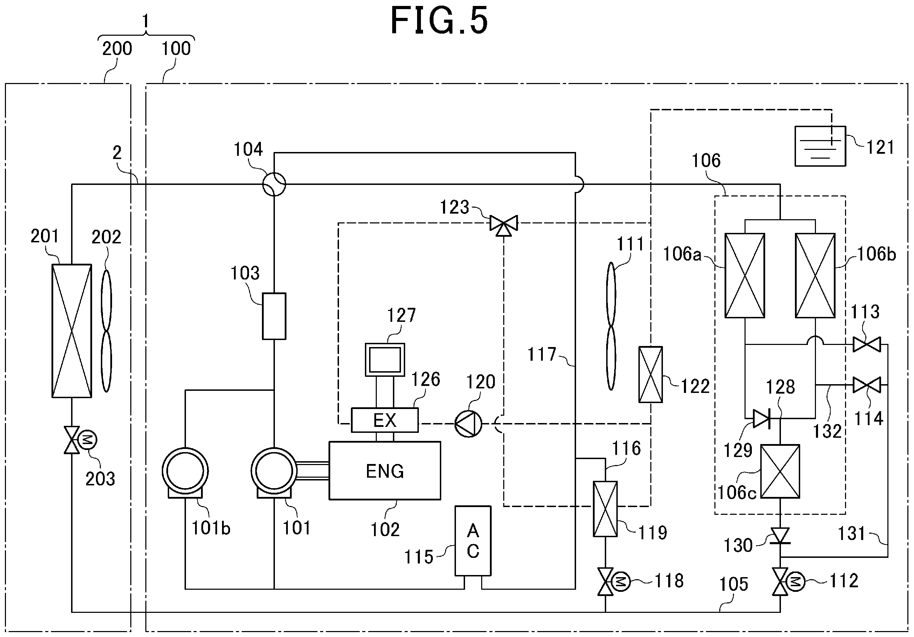

For example, as shown in Fig. 5, a compressor 101 using a gas engine 102 as a drive source and a second compressor 101b using an electric motor as a drive source may be connected in parallel.

In GHP, in heating operation, the refrigerant typically exchanges heat with the gas engine cooling water to absorb heat in the exhaust heat recovery heat exchanger. Therefore, in some cases, the required amount of heat can be exchanged without allowing the refrigerant to flow to an outdoor heat exchanger and exchanging heat between the refrigerant and the air.

Contrarily, in the present embodiment, the rated output of the gas engine 102 is reduced, so that the amount of exhaust heat is reduced. In other words, this reduces, in heating operation, the amount of heat that the refrigerant can absorb from the cooling water of the gas engine 102 in the exhaust heat recovery heat exchanger 119. Furthermore, in low-load operation, when air conditioning is performed only by the second compressor 101b using the electric motor as a drive source, exhaust heat from the gas engine 102 cannot be obtained. Therefore, in heating operation, it is necessary to allow the refrigerant to flow through the outdoor heat exchanger 106 and exchange heat between the refrigerant and the air, regardless of the air conditioning load. In such a case, the air conditioner according to the present disclosure is more effective in preventing refrigerating machine oil from remaining when the heat exchanger is used as an evaporator.

In the description of Embodiment 2, the outdoor flow rate control valve 112 is arranged in the refrigerant liquid pipe 105 as an example of a refrigerant depressurizing means in heating operation of the air conditioner 1. The air conditioner 1 just needs to be able to close the flow of refrigerant in the first bypass pipe 131 in cooling operation, and just needs to allow the refrigerant, which has been depressurized by the outdoor flow rate control valve 112, to flow into the first region 106a and the second region 106b in heating operation. Therefore, the outdoor flow rate control valve 112 does not need to be provided in the refrigerant liquid pipe 105.

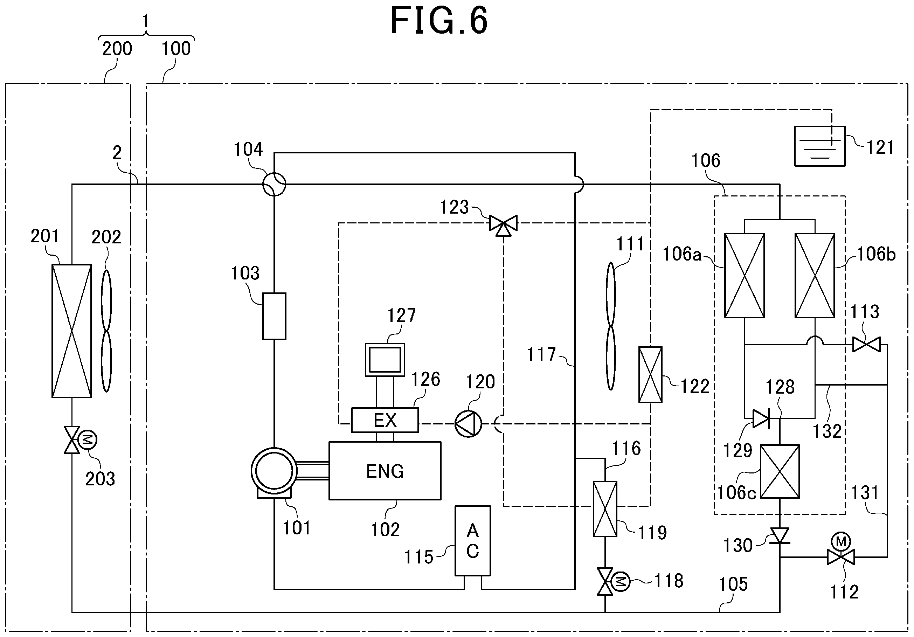

For example, as shown in Fig. 6, the outdoor flow rate control valve 112 may be provided between the connection of the first bypass pipe 131 with the refrigerant liquid pipe 105 and the connection of the first bypass pipe 131 with the second bypass pipe 132. In this case, since the outdoor flow rate control valve 112 can also operate as the second on-off valve 114, the second on-off valve 114 is unnecessary. Therefore, there is generated no pressure loss of the refrigerant passing through the second on-off valve 114. This reduces the refrigerant pressure difference in the compressor 101 between the rear and the front, and can reduce the compressor power.

In Embodiment 2, the description has illustrated, as an example of the outdoor heat exchanger 106, the outdoor heat exchanger 106 that has a front surface area equivalent to that of Embodiment 1 and includes a first region 106a, a second region 106b, and a third region 106c, in which the refrigerant flows in parallel to each other. The outdoor heat exchanger 106 only needs to include a first region 106a, a second region 106b, and a third region 106c in which the refrigerant flows in parallel to each other. Therefore, the outdoor heat exchanger 106 may have a different front surface area from that of Embodiment 1.

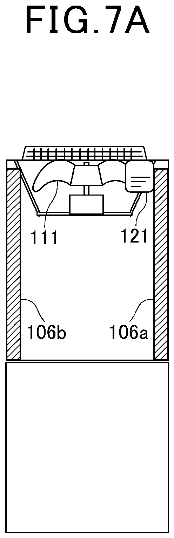

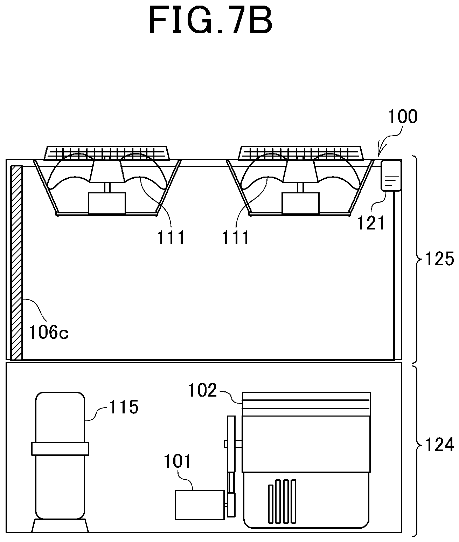

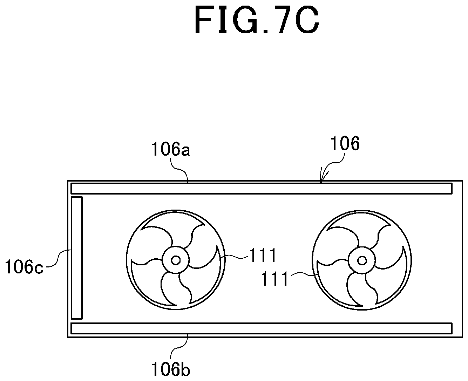

For example, as shown in Figs. 7A to 7C, the outdoor heat exchanger 106 may have an increased front surface area and have the third region 106c arranged on the side surface of the casing of the outdoor unit 100. In this case, increase in the front surface area of the outdoor heat exchanger 106 increases the heat transfer area and the amount of passing air. Generally, the amount of heat to be exchanged Q in a heat exchanger is given by Expression 1, where K is the heat transfer rate of the heat exchanger, A is the heat transfer area, and $\Delta T$ is the temperature difference between the fluids that exchange heat.

$$Q = K \bullet A \bullet \Delta T \ ... \ (\text{Expression 1})$$

In the present embodiment, the heat transfer rate K increases due to the increase in the heat transfer area A and the amount of passing air, allowing the amount of heat to be exchanged Q to increase.

Note that the above-described embodiments are for illustrating the technique according to the present disclosure, and therefore various changes, substitutions, additions, omissions, etc. can be made within the scope of the claims or equivalents thereof.

[Industrial Applicability]

The present disclosure is applicable to an air conditioner in which refrigerating machine oil remains in the outdoor heat exchanger in heating operation. Specifically, the present disclosure is applicable to a gas heat pump air conditioner that uses a gas engine as a drive source for a compressor that compresses refrigerant.

[Reference Signs List]

1. air conditioner
2 unit pipe
100 outdoor unit
101 compressor
101b second compressor
102 gas engine
103 oil separator
104 four-way valve
105 refrigerant liquid pipe
106 outdoor heat exchanger
106a first region
106b second region
106c third region
107 upper header pipe
108 lower header pipe

109 heat transfer tube
110 heat transfer fin
111 outdoor fan
112 outdoor flow rate control valve (flow rate control valve)
113 first on-off valve (on-off valve)
114 second on-off valve
115 accumulator
116 exhaust heat recovery bypass pipe
117 low-pressure gas pipe
118 exhaust heat recovery flow rate control valve
119 exhaust heat recovery heat exchanger
120 cooling water pump
121 reservoir tank
122 radiator
123 three-way valve
124 machine room
125 heat exchanger room
126 exhaust gas heat exchanger
127 exhaust gas muffler
128 confluence section
129 first check valve
130 second check valve
131 first bypass pipe
132 second bypass pipe
200 indoor unit
201 indoor heat exchanger
202 indoor fan
203 indoor flow rate control valve

Claims

1. An air conditioner, comprising:

    a compressor;
    an outdoor heat exchanger;
    a flow rate control valve; and
    an indoor heat exchanger,
    the compressor, the outdoor heat exchanger, the flow rate control valve, and the indoor heat exchanger being sequentially connected with a refrigerant pipe in an annular manner, the air conditioner: causing a refrigerant to flow in the refrigerant pipe, exchanging heat with air in a predetermined space in the indoor heat exchanger; and controlling temperature in the predetermined space, **characterized in that**
    the outdoor heat exchanger includes a first region and a second region in which a refrigerant flows in parallel to each other, and
    the first region has a refrigerant inflow section, on a side of the flow rate control valve, provided with an on-off valve.

2. The air conditioner according to claim 1, further comprising a control section that controls the compressor, the flow rate control valve, and the on-off valve,

wherein the control section opens the on-off valve in high-load heating operation and closes the on-off valve in low-load heating operation.

3. The air conditioner according to claim 2, further comprising:

an exhaust heat recovery bypass pipe, the exhaust heat recovery bypass pipe branching off from a refrigerant pipe between the outdoor heat exchanger and the indoor heat exchanger, the exhaust heat recovery bypass pipe being connected to a suction side of the compressor; and an exhaust heat recovery flow rate control valve, the exhaust heat recovery flow rate control valve being provided in a middle part of the exhaust heat recovery bypass pipe,
wherein the control section opens the exhaust heat recovery flow rate control valve in heating operation.

4. The air conditioner according to claim 2 or 3, wherein

the outdoor heat exchanger includes a third region,
a refrigerant pipe between the first region and the third region is provided with a first check valve that allows a refrigerant to flow only in one direction from the first region to the third region,
the third region has a refrigerant inflow section, on the side of the flow rate control valve, provided with a second check valve that allows a refrigerant to flow only in one direction from the third region to the side of the flow rate control valve,
a first bypass pipe and a second bypass pipe are provided, the first bypass pipe branching off from a refrigerant pipe between the outdoor heat exchanger and the indoor heat exchanger, the first bypass pipe being connected to a refrigerant pipe between the third region and the first region, the second bypass pipe branching off from the first bypass pipe, the second bypass pipe being connected to a refrigerant pipe between the third region and the second region,
the first bypass pipe has a middle part provided with the on-off valve, and the second bypass pipe has a middle part provided with a second on-off valve, and
the control section opens the on-off valve and the second on-off valve in high-load heating operation, and closes the on-off valve and opens the second on-off valve in low-load heating operation.

# FIG.1

EP 4 403 848 A1

# FIG.2

EP 4 403 848 A1

# FIG.3A

# FIG.3B

# FIG.3C

FIG.4

# FIG.5

EP 4 403 848 A1

# FIG.6

EP 4 403 848 A1

# FIG.7A

111    121

106b    106a

# FIG.7B

# FIG.7C

## INTERNATIONAL SEARCH REPORT

International application No.

**PCT/JP2022/033584**

### A. CLASSIFICATION OF SUBJECT MATTER

*F25B 5/02*(2006.01)i; *F25B 1/00*(2006.01)i; *F24F 11/42*(2018.01)i
FI:    F25B1/00 387D; F25B5/02 B; F24F11/42; F25B1/00 351J

According to International Patent Classification (IPC) or to both national classification and IPC

### B. FIELDS SEARCHED

Minimum documentation searched (classification system followed by classification symbols)

F25B5/02; F25B1/00; F24F11/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-190649 A (FUJITSU GENERAL LTD) 06 October 2014 (2014-10-06) paragraphs [0028]-[0046], fig. 1 | 1-2 |
| Y | | 2-3 |
| A | | 4 |
| Y | JP 11-14177 A (MITSUBISHI HEAVY IND LTD) 22 January 1999 (1999-01-22) paragraphs [0023]-[0045], fig. 1-3 | 2-3 |
| A | | 4 |
| Y | JP 2006-29734 A (MATSUSHITA ELECTRIC IND CO LTD) 02 February 2006 (2006-02-02) paragraphs [0036]-[0039], fig. 11-12 | 2-3 |
| A | WO 2020/255484 A1 (MITSUBISHI ELECTRIC CORPORATION) 24 December 2020 (2020-12-24) entire text, all drawings | 1-4 |

☑ Further documents are listed in the continuation of Box C.        ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/033584** |

**C.      DOCUMENTS CONSIDERED TO BE RELEVANT**

| Category* | Citation of document, with indication, where appropriate, of the relevant passages | Relevant to claim No. |
|---|---|---|
| A | JP 2004-286246 A (MATSUSHITA ELECTRIC IND CO LTD) 14 October 2004 (2004-10-14) <br>      entire text, all drawings | 1-4 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2014-190649 | A | 06 October 2014 | (Family: none) | | | |
| JP | 11-14177 | A | 22 January 1999 | (Family: none) | | | |
| JP | 2006-29734 | A | 02 February 2006 | CN | 1724952 | A | |
| WO | 2020/255484 | A1 | 24 December 2020 | EP | 3985315 | A1 | |
| | | | | CN | 113994149 | A | |
| JP | 2004-286246 | A | 14 October 2004 | (Family: none) | | | |

Form PCT/ISA/210 (patent family annex) (January 2015)

**EP 4 403 848 A1**

## REFERENCES CITED IN THE DESCRIPTION

**Patent documents cited in the description**

- JP 2004286246 A

- JP 2021148511 A